# EUROPEAN PATENT SPECIFICATION

(11) **EP 2 685 464 B1**
(45) Date of publication and mention of the grant of the patent: **17.02.2021**
(21) Application number: 11860303.4
(22) Date of filing: 08.03.2011
(51) Int. Cl.: H01B 7/08, H01B 7/00, H01B 13/012, H02G 3/04

(54) **METHOD OF ASSEMBLING A WIRING HARNESS**
VERFAHREN ZUR HERSTELLUNG EINES KABELBAUMS
CÂBLE PLAT, ET FAISCEAU ÉLECTRIQUE

(43) Date of publication of application: 15.01.2014
(73) Proprietor: Yazaki Corporation, Minato-ku Tokyo 108-8333 (JP)
(72) Inventor: UEHARA, Takehiko, Toyota-shi Aichi 470-1294 (JP); MURAKAMI, Yoshihiro, Kosai-shi Shizuoka 431-0431 (JP); SATOU, Kunihiko, Kosai-shi Shizuoka 431-0431 (JP); YAMAMOTO, Masataka, Kosai-shi Shizuoka 431-0431 (JP)
(74) Representative: Grünecker Patent- und Rechtsanwälte PartG mbB
(86) International application number: PCT/JP2011/055353
(87) International publication number: WO 2012/120639

(56) References cited:
- WO-A1-2007/119326
- WO-A1-2008/123114
- WO-A1-2010/095334
- JP-A- S4 983 884
- JP-A- 2001 084 850
- JP-A- 2008 192 458
- JP-A- 2011 028 952
- JP-A- 2011 028 952
- JP-A- 2011 103 242
- JP-B- 55 038 766
- JP-U- 61 018 514
- JP-U- 63 021 911
- SU-A1- 647 747
- US-A- 3 582 537
- US-B1- 6 472 602

## Description

### [Technical Field]

The present invention relates to a method of assembling a wiring harness comprising a flat cable.

### [Background Art]

In an electric machine such as a vehicle as a moving object, a wiring harness is arranged for electrically connecting various electronic devices to each other. In some cases, this wiring harness includes: a flat cable formed in a flat shape by integrating covering sections made of insulator with a connecting section made of insulator, each of the covering section covering each of conductors having the same diameter and arranged parallel to each other at regular intervals; and a connector attached to ends of the conductors of this flat cable.

The above flat cable is made by integral extrusion molding in a manner that insulator made of polyolefin series resin or the like is continuously extruded around conductors arranged in parallel and covers the conductors. Therefore, when the number of conductors, a diameter of the conductor, or a width of the connecting section of the insulator is changed, it is necessary to provide a new mouthpiece for extrusion molding. Thereby, the number of product numbers is increased to prevent the production cost from being reduced.

Therefore, the applicant of the present invention proposed a flat cable for integrating various shaped conductors without increasing the production cost (for example, see JP 2004 319272 A).

The flat cable disclosed in JP 2004 319272 A includes: a plurality of covered electric wires; a tape-shaped reinforcing member for bundling the plurality of covered electric wires; and a string for sewing the reinforcing member to fix the plurality of covered electric wires to each other.

Each covered electric wire is defined by a conductor and a cover covering the conductor, and formed in a circular sectional shape. The covered electric wires are spaced from each other and arranged in parallel. A plurality of the reinforcing members is provided spaced from each other in a longitudinal direction of the covered electric wires, and parallel to each other. A longitudinal direction of the reinforcing member is perpendicular (crossed) to the longitudinal direction of the covered electric wires. The reinforcing members are overlapped with the plurality of covered electric wires.

In the flat cable shown in JP 2004 319272 A, by binding the plurality of covered electric wires with the reinforcing members and the string, the plurality of covered electric wires are fixed parallel to each other. Further, in flat cable shown in JP 2004 319272 A, by properly changing the wire diameter and the number of the covered electric wires bound with the reinforcing members and the string, it is possible to integrate various shaped conductors without increasing the production cost.

Furthermore, SU 647 747 A1 refers to manufacturing techniques for cables being interwoven by weft yarns made of synthetic material.

The prior art in JP 2011 028952 A discloses a flat cable harness capable of maintaining a disconnection protective function compatibly with simplifying a weft removing treatment. According to JP 2011 028952 A, a rough part with a wide interwoven pitch of resin fibers along a longitudinal direction of each electric wire and a dense part with a narrow interwoven pitch of the resin fibers are formed in the flat cable harness arrayed flat-likely with the plurality of electric wires, and woven with the electric wires as warps and the resin fibers as the wefts.

US 3 582 537 A discloses a woven ribbon cable comprising: a plurality of insulated wires extending in a warp direction in generally parallel relationship, said wires being held in parallel relationship by a lattice structure comprising members extending in the warp direction and located between said wires and members extending in a weft direction across the wires and interwoven with said wires and said warp members, said warp members and said weft members being bonded to each other at their points of intersection to provide a unitary lattice structure, the insulation of said wires and said lattice structure being free of bonding therebetween whereby the lattice structure is capable of moving as a unit relative to the insulated wires.

Finally, an electric fence line comprising a flat tape which is constructed of a plurality of electrically conductive wire strands arranged in parallel to a plurality of warp yarns and one elongated weft yarn which is woven into the flat tape in an alternating pattern in relation to the wire strands and warp yarns is known from US 6 472 602 B1. In addition, at least one electrically conductive bonding strand is woven into the tape in a repeating pattern crossing diagonally across each of the electrically conductive wire strands.

### [Summary of Invention]

### [Technical Problem]

In the conventional flat cable shown in JP 2004 319272 A, when a connector is attached to an end of the covered electric wire, it is necessary to cut a reinforcing member positioned at an end of the flat cable, and to change properly intervals between the covered electric wires before attaching the terminals to the ends of the covered electric wires. In contrast, in the flat cable conventionally used, it is necessary to cut the connecting section at the end, and to change intervals between the covered electric wires properly before attaching the terminals to the ends of the covered electric wires.

In this way, in the flat cable shown in JP 2004 319272 A, when the terminals are attached to the ends of the covered electric wires, it is necessary to cut the reinforcing member, and man-hours may be increased.

Accordingly, an object of the present invention is to provide a method of assembling a wiring harness allowing a connector to be easily attached to terminals.

### [Solution to Problem]

This object is accomplished according to the present invention by the method of assembling a wiring harness as defined in claim 1. A preferred embodiment of the method according to the present invention is specified in dependent claim 2.

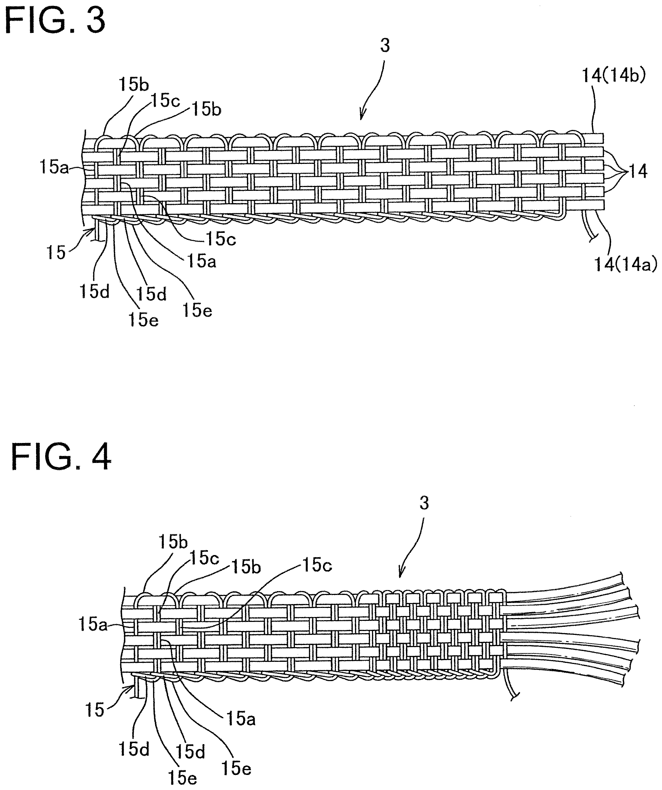

According to a first embodiment, there is provided a flat cable comprising:
a plurality of electric wires parallel to each other, and terminals being attached to ends thereof; and
an elongated weft provided with crossing sections perpendicular to the plurality of electrical wires and rising and falling with respect to the plurality of electrical wires by a certain rule, and parallel sections continuous with the crossing sections and overlapping the electrical wires positioned at an edge of the plurality of electrical wires,
as is illustrated in Figures 3 to 5 of the drawings, at ends of the plurality of electric wires, a crossing section of the weft alternately rising and falling, and crossing with respect to the plurality of electric wires started from the electric wire disposed at the lowest end among the plurality of the electric wire is formed, a parallel section overlapped with the electric wire disposed at the highest end is formed, a second crossing section alternately rising and falling, and crossing with respect to the plurality of electric wires started from the electric wire is formed, a second parallel section overlapped with the electric wire is formed and caught by the crossing section, a third parallel portion again overlapped with the electric wire is formed, thereby, the crossing section alternately rising and falling from the electric wire and crossing to the electric wires is formed, wherein the electrical wires adjacent to each other are disposed with a gap therebetween, and the crossing sections adjacent to each other of the weft are disposed with a gap therebetween so that the weft is movable along the longitudinal direction of the electric wires relative to the electric wires in a direction away from an end of the flat cable and the ends of the electric wires are separable from each other.

According to a second embodiment, there is provided the flat cable as described in the first embodiment,
wherein the plurality of electric wires is provided with a warp therebetween parallel to the plurality of electric wires and made of the same material as the weft.

According to the flat cable of the first embodiment, the flat cable is formed by weaving a plurality of electric wires and an elongated weft interlaced in a certain rule, the electric wires adjacent to each other are disposed with a gap therebetween, and the crossing sections adjacent to each other of the weft perpendicular to the plurality of electrical wires are disposed with a gap therebetween. Therefore, the weft is easily movable in a longitudinal direction of the electric wire relative to the plurality of electric wires. Therefore, at the end of the flat cable, by moving the weft in a direction removing from the end, the ends of the electric wires are separated from each other.

Further, because the flat cable is formed by weaving a plurality of electric wires and an elongated weft interlaced in a certain rule, an outer diameter and the number of the electric wires woven with the weft can be easily changed.

According to the flat cable of the second embodiment, because the warp made of the same material as the weft is provided in between the plurality of electric wires, tensile stress and bending stress acting on the flat cable can be borne by the warp.

### [Advantageous Effects of Invention]

As explained above, according to the first embodiment, at the end of the flat cable, by moving the weft in a direction removing from the end, the ends of the electric wires are separated from each other. Therefore, by only moving the weft, the terminal, namely, the connector can be attached to an end of the flat cable. Thereby, the man-hours for this operation can be prevented from increasing. Therefore, the connector can be easily attached to the end of the flat cable.

Further, because the flat cable is formed by weaving a plurality of electric wires and an elongated weft interlaced in a certain rule, an outer diameter and the number of the electric wires woven with the weft can be easily changed. Therefore, the conductors having various shapes can be integrated without increasing the production cost.

According to the second embodiment, because the tensile stress and the bending stress acting on the flat cable can be borne by the warp, the mechanical strength of the flat cable can be improved.

### [Brief Description of Drawings]

[Fig. 1]

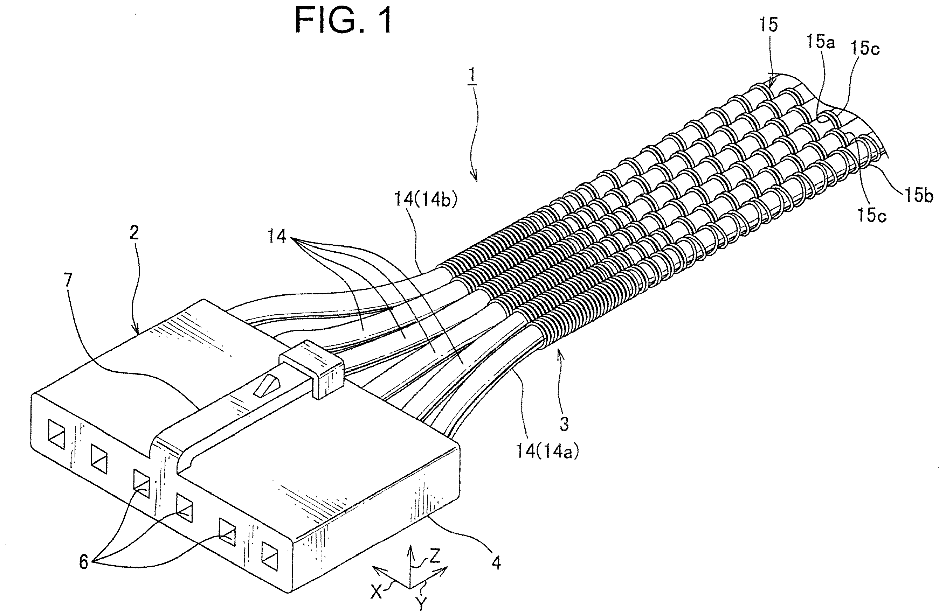

   Fig. 1 is a perspective view showing a wiring harness according to an embodiment.
[Fig. 2]

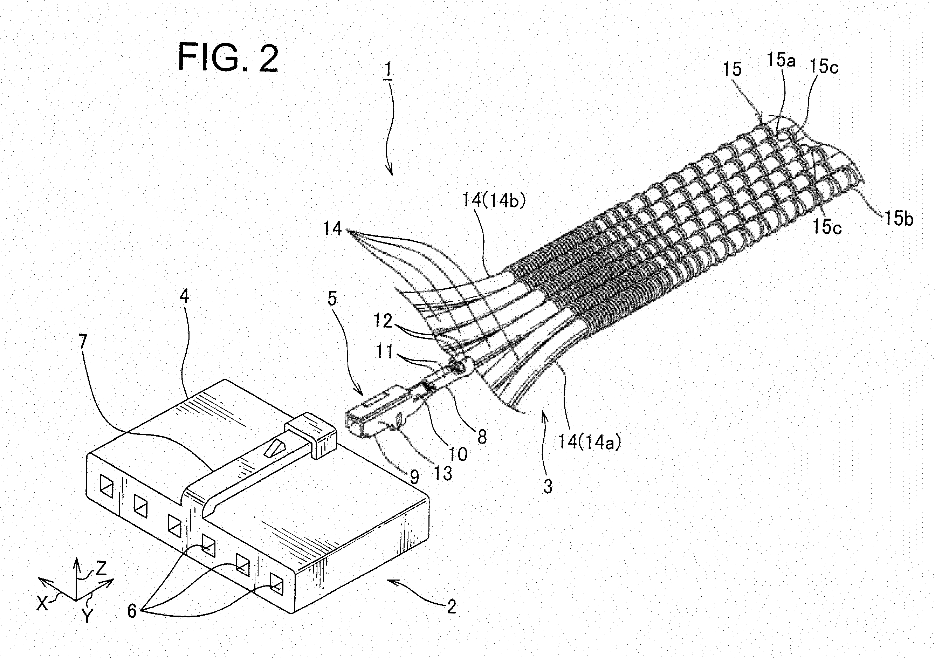

   Fig. 2 is an exploded perspective view showing a connector of the wiring harness shown in Fig. 1.
[Fig. 3]
   Fig. 3 is a plan view showing a condition that the flat cable of the wiring harness shown in Fig. 1 is woven of a weft and a plurality of electric wires.
[Fig. 4]
   Fig. 4 is a plan view showing a condition that the weft at an end of the flat cable shown in Fig. 4 is moved.
[Fig. 5]

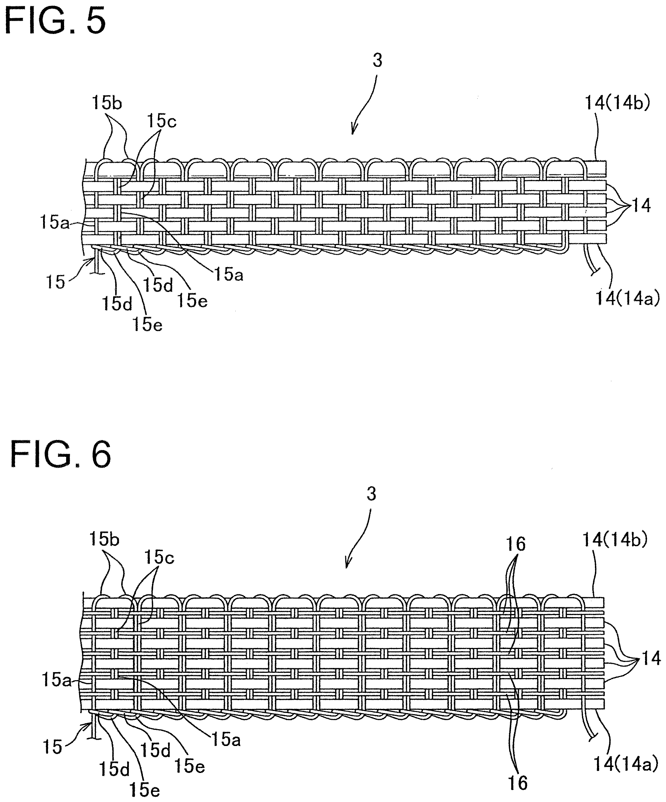

   Fig. 5 is a plan view showing a modified embodiment of the flat cable shown in Fig. 3.
[Fig. 6]
   Fig. 6 is a plan view showing another modified embodiment of the flat cable shown in Fig. 3.

### [Description of Embodiments]

A wiring harness and a flat cable according to an embodiment will be explained with reference to Figs. 1 to 4.

A wiring harness 1 according to an embodiment is arranged in a vehicle as an electric machine, and electrically connects various electronic devices mounted on the vehicle to each other. As shown in Figs. 1 and 2, the wiring harness 1 includes a connector 2 and a flat cable 3.

As shown in Fig. 2, the connector 2 includes: a connector housing 4; and a plurality of terminals 5 (hereinafter only referred to as female terminal and Fig. 2 shows only one terminal and others are omitted). Incidentally, in Fig. 1, hereinafter, a longitudinal direction of a later-described electric wire 14 and a terminal receiving chamber 6 is referred to as a depth direction, and denoted by an arrow Y. A direction perpendicular to the depth direction Y and an arranging direction of a later-described plurality of terminal receiving chambers 6 is referred to as a width direction, and denoted by an arrow X. A direction perpendicular to both the depth direction Y and the width direction X is referred to as a thickness direction, and denoted by an arrow Z.

The connector housing 4 is made of insulating synthetic resin, and formed in a tubular (boxy) shape. A plurality of terminal receiving chambers 6 is provided at an inside of the connector housing 4, and a locking arm 7 is provided on an outer surface of the connector housing 4. The terminal receiving chamber 6 is a straight space (hole). A longitudinal direction of the terminal receiving chamber 6 is parallel to the depth direction Y. The plurality of terminal receiving chambers 6 is arranged parallel to each other. Both ends of the terminal receiving chamber 6 are opened on the outer surface of the connector housing 4. The locking arm 7 is fitted to a connector housing of a mating connector.

After an electric wire 14 is attached to a later-described wire connecting portion 8 of the female terminal 5, the female terminal 5 is received in the terminal receiving chamber 6. Then, the female terminal 5 is electrically connected to a core wire of the electric wire 14.

As shown in Fig. 2, the female terminal 5 is made of conductive plate metal, and integrally includes: a wire connecting portion 8; and an electric contact portion 9. The wire connecting portion 8 integrally includes: a flat-plate-shaped bottom plate 10; a pair of core wire caulking pieces 11; and a pair of cover caulking pieces 12. The bottom plate 10 is formed in a rectangular shape in plan view. The pair of core wire caulking pieces 11 is provided at the center in a longitudinal direction of the bottom plate 10. The pair of core wire caulking pieces 11 stands up from both edges in a width direction of the bottom plate 10. The pair of core wire caulking pieces 11 is bent so that an edge away from the bottom plate 10 approaches the bottom plate 10, and holds the core wire with the bottom plate 10 to caulk the core wire.

The pair of cover caulking pieces 12 is provided at one end in a longitudinal direction of the bottom plate 10. The pair of cover caulking pieces 12 stands up from both edges in a width direction of the bottom plate 10. The pair of cover caulking pieces 12 is bent so that an edge away from the bottom plate 10 approaches the bottom plate 10, and holds the cover, namely, the electric wire 14 with the bottom plate 10 to caulk the electric wire 14.

When the pair of core wire caulking pieces 11 caulks the core wire, and the pair of cover caulking pieces 12 caulks the cover, the wire connecting portion 8 is electrically and mechanically connected to the electric wire 14. A longitudinal direction of the wire connecting portion 8 and a longitudinal direction of the electric wire 14 connected to the wire connecting portion 8 are parallel to each other.

As shown in Fig. 2, the electric contact portion 9 integrally includes: a tubular shaped portion 13; and a not-shown spring piece provided in the tubular shaped portion 13. The tubular shaped portion 13 is continued to the bottom plate 10 of the wire connecting portion 8. The spring piece holds a tab of a mating male terminal (hereinafter referred to as male terminal) inserted into the tubular shaped portion 13 with an inner surface of the tubular shaped portion 13 to electrically connect the male and female terminals.

When the female terminal 5 attached to an end of the electric wire 14 is received in the terminal receiving chamber 6 of the connector housing 4, the above connector 2 is assembled. Then, the connector 2 is fitted to a mating connector. Incidentally, in the embodiment shown in Fig. 2, only the connector 2 attached to one end of the flat cable 3 is shown. However, according to the present invention, the connector 2 is properly attached to a necessary position such as the other end of the flat cable 3.

As shown in Figs. 1 to 4, the flat cable 3 includes: a plurality of electric wires 14 arranged parallel to each other with a gap; and an elongated weft 15. Namely, the electric wires 14 adjacent to each other among the plurality of electric wires 14 are disposed with a gap therebetween.

The electric wire 14 includes: a conductive core wire; and an insulating cover. The core wire is defined by bundling a plurality of element wires. The element wire is made of metal such as copper. The cover is made of insulating synthetic resin such as polyvinyl chloride or polyolefin resin, and covers the core wire. Incidentally, in this embodiment, outer diameters of the plurality of electric wires 14 are the same.

The weft 15 is formed in an deformable long filament. As the material of the weft 15, one or more materials can be properly selected and used from among the materials used for defining a conventional woven (fabric) such as polyester, polyamide resin, polypropylene, cotton, carbon, metal, or the like.

As shown in Fig. 3, at ends of the plurality of electric wires 14, a crossing section 15a of the weft 15 alternately rising and falling, and crossing with respect to the plurality of electric wires 14 started from the electric wire 14 disposed at the lowest end (hereinafter denoted by reference sign 14a) among the plurality of the electric wire 14 is formed. Then, a parallel section 15b overlapped with the electric wire 14 disposed at the highest end (hereinafter denoted by reference sign 14b) is formed. Then, a second crossing section 15c (corresponding to the crossing section) alternately rising and falling, and crossing with respect to the plurality of electric wires 14 started from the electric wire 14b is formed. Then, a second parallel section 15d (corresponding to the parallel section) overlapped with the electric wire 14a is formed and caught by the crossing section 15a. Then, a third parallel portion (corresponding to the parallel section) again overlapped with the electric wire 14a is formed. Thereby, the crossing section alternately rising and falling from the electric wire 14a and crossing to the electric wires 14 is formed. The weft 15 is crossed with respect to the plurality of electric wires 14, 14a, 14b by a certain rule to be woven, by forming sequentially and repeatedly the crossing section 15a, the parallel section 15b, the second crossing section 15c, the second parallel section 15d, the third parallel section 15e, and the crossing section 15a, and by catching the second parallel section 15d together with the crossing section 15a by the second crossing section 15c.

In this way, when alternately rising and falling with respect to the plurality of electric wires 14, 14a, 14b, the crossing sections 15a, 15b are arranged rising and falling by a certain rule. Further, the crossing sections 15a, 15c adjacent to each other are arranged with a gap therebetween. At each of the crossing sections 15a, 15c, the weft 15 is perpendicular to (crossing) the longitudinal direction of the electric wires 14, 14a, 14b. When the weft 15 is woven with respect to only the plurality of electric wires 14, 14a, 14b in the above described manner, the plurality of electric wires 14, 14a, 14b are arranged in the same plane with a gap therebetween and parallel to each other, and fixed to each other.

When the above electric wires 14, 14a, 14b are arranged with a gap therebetween, and the crossing sections 15a, 15c are arranged with a gap therebetween, the weft 15, as a whole, is movably supported relative to the plurality of electric wires 14, 14a, 4b. Incidentally, in the present invention, the phrase that the above electric wires 14, 14a, 14b are arranged with a gap therebetween, and the crossing sections 15a, 15c are arranged with a gap therebetween indicates that the weft 15 is movable in the longitudinal direction of the plurality of electric wires 14, 14a, 14b relative to the plurality of electric wires 14, 14a, 14b.

The above wiring harness 1 is assembled as follows. First, the above plurality of electric wires 14, 14a, 14b having a specific length is arranged parallel to each other, and the weft 15 is woven with respect to the plurality of electric wires 14, 14a, 14b in a manner that the crossing section 15a, the parallel section 15b, the second crossing section 15c, the second parallel section 15d the third parallel section 15e, and the crossing section 15a are sequentially and repeatedly formed. In this way, as shown in Fig. 3, the flat cable 3 is assembled. Then, the weft 15 is moved away from an end of the flat cable 3. Then, as shown in Fig. 4, the plurality of electric wires 14, 14a, 14b is separated from each other at the end of the flat cable 3. Then, the female terminals 5 are attached to ends of the electric wires 14, 14a, 14b, and inserted into the terminal receiving chambers 6 of the connector housing 4. Thereby, the above wiring harness 1 is assembled. The wiring harness 1 assembled in this way is arranged in a vehicle, and the connector 2 is fitted to a mating connector provided on electronic devices mounted on the vehicle.

According to this embodiment, the elongated weft 15 is woven with respect to the plurality of electric wires 14, 14a, 14b into the flat cable 3 by a certain rule, adjacent electric wires 14, 14a, 14b are disposed with a gap therebetween, and the crossing sections 15a, 15c of the weft 15 perpendicular to the electric wire 14 are disposed with a gap therebetween. Therefore, the weft 15 can be easily moved along the longitudinal direction of the electric wires 14, 14a, 14b relative to the electric wires 14, 14a, 14b. Thereby, by moving the weft 15 in a direction away from an end of the flat cable 3, the ends of the electric wires 14, 14a, 14b are separated from each other. Thus, by only moving the weft 15, the female terminal 5, namely, the connector 2 can be attached to the ends of the electric wires 14, 14a, 14b, and the man-hours for this operation can be prevented from increasing. Therefore, the connector 2 can be easily attached to the end of the flat cable 3.

Further, because the flat cable 3 is formed by weaving the plurality of electric wires 14, 14a, 14b and the elongated weft 15 interlaced in a certain rule, an outer diameter and the number of the electric wires 14, 14a, 14b woven with the weft 15 can be easily changed. Therefore, the conductors having various shapes can be integrated without increasing the production cost.

Further, because the second parallel section 15d is caught by the crossing sections 15a, 15c, while the weft 15 is movable in the longitudinal direction of the electric wires 14, 14a, 14b, the weft 15 is prevented from separating from the electric wires 14, 14a, 14b.

Because the wiring harness 1 of this embodiment includes the above flat cable 3, the connector 2 can be easily attached to an end of the flat cable 3, and the wiring harness 1 can be easily assembled.

The above flat cable 3 includes the plurality of electric wires 14, 14a, 14b having the same outer diameters. However, according to the present invention, as shown in Fig. 5, as the electric wires 14, 14a, 14b defining the flat cable 3, the electric wires 14, 14a, 14b having the different outer diameters can be properly selected. Incidentally, in Fig. 5, an outer diameter of one electric wire 14b positioned at the topmost in Fig. 5 is larger than those of the other electric wires 14, 14a, and the outer diameters of the electric wires 14, 14a are the same. Namely, in a case shown in Fig. 5, outer diameters of at least two electric wires are different from each other. Further, in Fig. 5, the same components as the above embodiments are denoted by the same reference signs, and an explanation thereof is omitted.

In this case shown in Fig. 5, outer diameters of at least two among the plurality of electric wires 14, 14a, 14b are different from each other. Therefore, the electric wires 14, 14a, 14b having necessary diameters can be properly used. Therefore, the conductors having various shapes can be surely integrated without increasing the production cost.

Further, in the flat cable 3 of the above embodiment, the weft 15 is woven with respect to only the plurality of electric wires 14, 14a, 14b. However, according to the present invention, as shown in Fig. 6, a warp 16 may be provided in between the plurality of electric wires 14, 14a, 14b. In this case shown in Fig. 6, the configuration of the warp 16 is completely the same as the weft 15, and the same material is used. Further, in the case shown in Fig. 6, the crossing sections 15a, 15c alternately rises and falls with respect to the plurality of electric wires 14, 14a, 14b and the warp 16. Further, in Fig. 6, the same components as the above embodiments are denoted by the same reference signs, and an explanation thereof is omitted.

In the case shown in Fig. 6, the warp 16 made of the same material as the weft 15 is provided in between the plurality of electric wires 14, 14a, 14b. Therefore, the tensile stress and the bending stress acting on the flat cable 3 can be borne by the warp 16. Therefore, the mechanical strength of the flat cable 3 can be improved.

In the above embodiment, the wiring harness 1 arranged in a vehicle is provided. However, according to the present invention, the wiring harness 1 can be used not only for a vehicle but also for an electronic device and an electric machine such as a portable computer or a mobile terminal.

Further, according to the present invention, the weft 15 can be woven with respect to the plurality of electric wires 14, 14a, 14b by not only a weave shown in the above embodiment, but also the other weaves such as plane weave, twill weave, or satin weave. Further, even in a case of the weave shown in the above embodiment, at the crossing sections 15a, 15c, the weft 15 may be woven in a manner to rise and fall with respect to some of the plurality of electric wires 14, 14a, 14b and the warp 16 by a certain rule.

### [Reference Signs List]

- 1: wiring harness
- 2: connector
- 3: flat cable
- 5: female terminal (terminal fitting)
- 14, 14a, 14b: electric wire
- 15: weft
- 15a: crossing section
- 15b: parallel section
- 15c: second crossing section
- 15d: second parallel section
- 15e: third parallel section
- 16: warp

## Claims

1. A method of assembling a wiring harness (1) comprising a flat cable (3) having a plurality of electric wires (14, 14a, 14b), and a connector (2) attached to an end of the flat cable (3), said method comprising:
assembling the flat cable (3) by arranging the plurality of electric wires (14, 14a, 14b) having a specific length parallel to each other and weaving an elongated weft (15) with respect to the plurality of electric wires (14, 14a, 14b) in a manner that the elongated weft (15) is provided with crossing sections (15a, 15c) perpendicular to the plurality of electrical wires (14, 14a, 14b) and alternately rising and falling with respect to the plurality of electrical wires (14, 14a, 14b), and parallel sections (15b, 15d, 15e) continuous with the crossing sections and overlapping the electrical wires positioned at an edge of the plurality of electrical wires, wherein, as is illustrated in Figures 3 to 5 of the drawings, at ends of the plurality of electric wires (14, 14a, 14b), a first crossing section (15a) of the weft (15) alternately rising and falling, and crossing with respect to the plurality of electric wires (14) started from the electric wire (14) disposed at the lowest end (14a) among the plurality of the electric wire (14) is formed, a first parallel section (15b) overlapped with the electric wire (14) disposed at the highest end (14b) is formed, a second crossing section (15c) alternately rising and falling, and crossing with respect to the plurality of electric wires (14) started from the electric wire (14b) is formed, a second parallel section (15d) overlapped with the electric wire (14a) is formed and caught by the first crossing section (15a), a third parallel portion again overlapped with the electric wire (14a) is formed, and, thereby, the crossing section alternately rising and falling from the electric wire (14a) and crossing to the electric wires (14) is formed, and wherein the electrical wires (14, 14a, 14b) adjacent to each other are disposed with a gap therebetween, and the crossing sections (15a, 15c) adjacent to each other of the weft (15) are disposed with a gap therebetween;
moving the elongated weft (15) away from an end of the flat cable (3), thereby separating the plurality of electric wires (14, 14a, 14b) from each other at the end of the flat cable (3);
attaching female terminals (5) to ends of the electric wires (14, 14a, 14b); and
inserting the female terminals (5) into terminal receiving chambers (6) of a connector housing (4) of the connector (2), thereby obtaining the wiring harness (1).

2. The method as claimed in claim 1, further comprising:
providing the plurality of electric wires (14, 14a, 14b) with a warp (16) therebetween parallel to the plurality of electric wires (14, 14a, 14b) and made of the same material as the weft (15).

## Patentansprüche

1. Verfahren zum Zusammensetzen eines Kabelbaums (1), der ein Flachkabel (3) mit einer Vielzahl elektrischer Drähte (14, 14a, 14b) und einen an einem Ende des Flachkabels (3) angebrachten Verbinder (2) umfasst, wobei das Verfahren umfasst:
Zusammensetzen des Flachkabels (3) durch Anordnen der Vielzahl elektrischer Drähte (14, 14a, 14b) mit einer bestimmten Länge parallel zueinander und Weben eines gestreckten Schusses (15) in Bezug auf die Vielzahl elektrischer Drähte (14, 14a, 14b), so dass der gestreckte Schuss (15) mit kreuzenden Abschnitten (15a, 15c) senkrecht zu der Vielzahl elektrischer Drähte (14, 14a, 14b), die in Bezug auf die Vielzahl elektrischer Drähte (14, 14a, 14b) abwechselnd ansteigen und abfallen, sowie parallelen Abschnitten (15b, 15d, (14, 14a, 14b) versehen ist, die sich an die kreuzenden Abschnitte anschließen und die elektrischen Drähte überlappen, die an einem Rand der Vielzahl elektrischer Drähte positioniert sind, wobei, wie in Figs. 3 bis 5 der Zeichnungen dargestellt, an Enden der Vielzahl elektrischer Drähte (14, 14a, 14b) ein erster kreuzender Abschnitt (15a) des Schusses (15) ausgebildet ist, der abwechselnd ansteigt und abfällt und die Vielzahl elektrischer Drähte (14), ausgehend von dem an dem untersten Ende (14a) angeordneten elektrischen Draht (14) der Vielzahl elektrischer Drähte (14), kreuzt, ein erster paralleler Abschnitt (15b) ausgebildet ist, der sich mit dem an dem höchsten Ende (14b) angeordneten elektrischen Draht (14) überlappt, ein zweiter kreuzender Abschnitt (15c) ausgebildet ist, der abwechselnd ansteigt und abfällt und die Vielzahl elektrischer Drähte (14), ausgehend von dem elektrischen Draht (14b) kreuzt, ein zweiter paralleler Abschnitt (15d) ausgebildet ist, der sich mit dem elektrischen Draht (14a) überlappt und von dem ersten kreuzenden Abschnitt (15a) gehalten wird, ein dritter paralleler Abschnitt ausgebildet ist, der sich wieder mit dem elektrischen Draht (14a) überlappt, und dadurch der kreuzende Abschnitt ausgebildet wird, der abwechselnd von dem elektrischen Draht (14a) ansteigt und abfällt und die elektrischen Drähte (14) kreuzt, und wobei die zueinander benachbarten elektrischen Drähte (14, 14a, 14b) mit einem Zwischenraum dazwischen angeordnet sind, und die zueinander benachbarten kreuzenden Abschnitte (15a, 15c) des Schusses (15) mit einem Zwischenraum dazwischen angeordnet sind;
Bewegen des gestreckten Schusses (15) weg von einem Ende des Flachkabels (3) und dadurch
Trennen der Vielzahl elektrischer Drähte (14, 14a, 14b) voneinander an dem Ende des Flachkabels (3);
Anbringen von Buchsenanschlüssen (5) an Enden der elektrischen Drähte (14, 14a, 14b); sowie
Einführen der Buchsenanschlüsse (5) in Anschluss-Aufnahmekammern (6) eines Verbindergehäuses (4) des Verbinders (2), und damit Herstellen des Kabelbaums (1).

2. Verfahren nach Anspruch 1, des Weiteren umfassend:
Versehen der Vielzahl elektrischer Drähte (14, 14a, 14b) mit einer Kette (16) zwischen ihnen parallel zu der Vielzahl elektrischer Drähte (14, 14a, 14b), die aus dem gleichen Material wie der Schuss (15) besteht.

## Revendications

1. Procédé d'assemblage d'un faisceau de câblage (1) comprenant un câble plat (3) présentant une pluralité de fils électriques (14, 14a, 14b), et un connecteur (2) rattaché à une extrémité du câble plat (3), ledit procédé comprenant :
assemblage du câble plat (3) en disposant la pluralité de fils électriques (14, 14a, 14b) présentant une longueur spécifique parallèles les uns aux autres et en tressant une trame allongée (15) par rapport à la pluralité de fils électriques (14, 14a, 14b) de manière à ce que la trame allongée (15) soit dotée de sections transversales (15a, 15c) perpendiculaires à la pluralité de fils électriques (14, 14a, 14b) et montant et descendant alternativement par rapport à la pluralité de fils électriques (14, 14a, 14b), et des sections parallèles (15b, 15d, 15e) continues avec les sections transversales et chevauchant les fils électriques positionnées au niveau d'une arête de la pluralité de fils électriques, dans lequel, tel qu'illustré aux figures 3 à 5 des dessins, au niveau d'extrémités de la pluralité de fils électriques (14, 14a, 14b), une première section transversale (15a) de la trame (15) montant et descendant alternativement, et transverse par rapport à la pluralité de fils électriques (14) commencée depuis le fil électrique (14) disposé au niveau de l'extrémité la plus basse (14a) parmi la pluralité de fils électriques (14) est constituée, une première section parallèle (15b) chevauchée avec le fil électrique (14) disposé au niveau de l'extrémité la plus haute (14b) est constituée, une deuxième section transversale (15c) montant et descendant alternativement, et transverse par rapport à la pluralité de fils électriques (14) commencée depuis le fil électrique (14b) est constituée, une deuxième section parallèle (15d) chevauchée avec le fil électrique (14a) est constituée et prise par la première section transversale (15a), une troisième partie parallèle à nouveau chevauchée avec le fil électrique (14a) est constituée, et, ainsi, la section transversale montant et descendant alternativement depuis le fil électrique (14a) et transverse aux fils électriques (14) est constituée, et dans lequel les fils électriques (14, 14a, 14b) adjacents les uns aux autres sont disposés avec un écart entre eux, et les sections transversales (15a, 15c) adjacentes l'une à l'autre de la trame (15) sont disposées avec un écart entre elles ;
déplacement de la trame allongée (15) en s'éloignant d'une extrémité du câble plat (3), séparant ainsi la pluralité de fils électriques (14, 14a, 14b) les uns des autres au niveau de l'extrémité du câble plat (3) ;
rattachement de bornes femelles (5) à des extrémités des fils électriques (14, 14a, 14b) ; et
insertion des bornes femelles (5) dans des chambres réceptrices de borne (6) d'un boîtier de connecteur (4) du connecteur (2), obtenant ainsi le faisceau de câblage (1) .

2. Le procédé tel que revendiqué à la revendication 1, comprenant en outre :
fourniture d'une chaîne (16) à la pluralité de fils électriques (14, 14a, 14b) entre ceux-ci parallèle à la pluralité de fils électriques (14, 14a, 14b) et constituée du même matériau que la trame (15).
